(19) Europäisches Patentamt
European Patent Office
Office européen des brevets

(11) **EP 3 013 516 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **14739351.6**

(22) Anmeldetag: **27.06.2014**

(51) Int Cl.:
*B23K 26/364* (2014.01)    *B23K 26/0622* (2014.01)
*B23K 26/352* (2014.01)    *B23K 103/00* (2006.01)
*B23K 26/08* (2014.01)    *B23K 26/38* (2014.01)
*B23K 26/40* (2014.01)    *C03B 33/02* (2006.01)

(86) Internationale Anmeldenummer:
**PCT/EP2014/001770**

(87) Internationale Veröffentlichungsnummer:
**WO 2014/206572 (31.12.2014 Gazette 2014/53)**

(54) **VERFAHREN ZUM ABTRAGSCHNEIDEN EINES WERKSTÜCKS MITTELS EINES GEPULSTEN LASERSTRAHLS**

METHOD FOR THE ABLATION CUTTING OF A WORKPIECE BY MEANS OF A PULSED LASER BEAM

PROCÉDÉ D'ABLATION AU LASER D'UNE PIÈCE, AU MOYEN D'UN FAISCEAU LASER PULSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2013 DE 102013212577**

(43) Veröffentlichungstag der Anmeldung:
**04.05.2016 Patentblatt 2016/18**

(73) Patentinhaber: **TRUMPF Laser- und Systemtechnik GmbH**
**71254 Ditzingen (DE)**

(72) Erfinder:
• **RUSS, Simone**
**78628 Rottweil (DE)**
• **AALDERINK, Dennis**
**71229 Leonberg (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
WO-A1-2009/117451    WO-A1-2009/117451
DE-B3-102012 205 702    US-A1- 2002 190 435
US-A1- 2008 160 295    US-A1- 2012 211 477
US-B1- 8 361 828

**Beschreibung**

Die Erfindung betrifft ein Verfahren zum Abtragen eines transparenten Werkstücks mittels eines gepulsten Laserstrahls gemäss dem Oberbegriff des unabhängigen Verfahrensanspruchs (siehe US2008/160295). Bei derartigen, Abtragverfahren wird aufeinanderfolgend Werkstückmaterial mittels des Laserstrahls vom Werkstück abgetragen.

Bei der schneidenden Bearbeitung von Werkstücken mittels eines Lasers, insbesondere beim Laserschneiden von dünnen Substraten aus beispielsweise Glas, Saphir oder dergleichen, treten bekanntermaßen nicht nur im unmittelbaren Bereich des Materialabtrags auf der dem Laserstrahl zugewandten Werkstückoberseite Schädigungen auf, sondern es bilden sich regelmäßig hiervon beabstandet auch so genannte Nebenbearbeitungszonen im Inneren des Werkstückmaterials oder auf der Werkstückunterseite, in denen das Werkstückmaterial durch den Laserprozess beschädigt (lokal modifiziert, z.B. aufgeschmolzen) wird. Die Ursache für die Bildung dieser Nebenbearbeitungszonen wird unter anderem in unerwünschten optischen Effekten, wie z.B. in Reflexionen des Laserstrahls, beim Laserschneiden innerhalb des zu zertrennenden optisch transparenten Werkstückmaterials vermutet. Der Grad der Ausbildung der Nebenbearbeitungszonen variiert auch abhängig vom Material und/oder von den Abmessungen des Werkstücks sowie von den Prozessparametern beim Laserschneiden.

Die vorbeschriebenen Nebenbearbeitungszonen bilden nicht nur einen optischen Mangel an dem bearbeiteten Werkstück, sondern beeinflussen auch dessen Stabilität in nachteiliger Weise. Beispielsweise wird die mechanische Belastbarkeit des bearbeiteten Werkstücks durch die Nebenbearbeitungszonen herabgesetzt und dadurch insbesondere die maximal ertragbare Biegespannung (Bruchbiegespannung) des Werkstücks verringert. Je weiter entfernt die Beschädigungen vom eigentlichen Schnittbereich auftreten, desto weniger ausgeprägt sind sie in der Regel.

Um den Einfluss der Materialbearbeitung auf einen vom eigentlichen Bearbeitungsbereich benachbarten Bereich zu verringern, ist aus der EP 1 945 401 B1 ein Verfahren zur Materialtrennung mittels eines Lasers bekannt, bei dem der zu bearbeitende Materialbereich mit einer Abfolge von Laserpulsen bestrahlt wird. Der bestrahlte Bereich von zumindest zwei zeitlich aufeinander folgenden Laserpulsen kann sich dabei räumlich im Bereich von 10% bis 99% überschneiden. Beim Durchschneiden des Werkstücks entlang einer Schnittfuge kann zu Beginn des Trennvorgangs zunächst eine hohe Laserenergie und anschließend eine verringerte Laserenergie aufgebracht werden.

Aus EP 2 258 512 B1 sind ferner ein Verfahren und eine Vorrichtung zum Teilen eines Substrats bekannt, wobei eine Mehrzahl von Pulsen auf das Substrat gerichtet wird, welche in der Lage sind, das Substrat lokal aufzuschmelzen. Dadurch wird im Inneren des Substrats ein strukturell geschwächter Bereich gebildet, wobei sich die einzelnen Laserpulse räumlich überlappen können. Anschließend kann das Substrat durch mechanisches Einwirken im geschwächten Bereich getrennt (gebrochen) bzw. geschnitten werden.

US 6 552 301 B2 offenbart weiterhin ein Verfahren, bei dem eine Abfolge von Laserpulsen auf ein Werkstückmaterial geschossen wird. Die Laserpulse haben dabei eine sehr kurze Pulsdauer und eine Flussdichte, die über einem Schwellwert zur Modifikation des Werkstückmaterials liegt.

Aus WO 2012/006736 A2 ist schließlich ein Verfahren zur Vorbereitung der Spaltung eines Substrats bekannt, wobei das Substrat mit einem oder mehreren Laserpulsen bestrahlt wird, sodass zunächst ein erstes Filament im Substrat entsteht. Durch eine Relativbewegung von Substrat und Laserstrahl wird an anderer Stelle ein zweites zusätzliches Filament im Substrat erzeugt, sodass die Filamente ein Muster bilden, entlang dem das Substrat gespalten wird.

Der vorliegenden Erfindung liegt die Aufgabe zugrunde, ein Verfahren zum Abtragschneiden von Werkstücken anzugeben, das die Nachteile des Standes der Technik überwindet. Insbesondere soll ein Verfahren bereitgestellt werden, durch das die Bildung von Nebenbearbeitungszonen bzw. Schädigungszonen idealerweise ganz verhindert oder zumindest verringert wird.

Diese Aufgabe wird erfindungsgemäß gelöst durch ein Verfahren mit folgenden Verfahrensschritten:

a) Vorbehandeln der Werkstückoberfläche durch Überfahren der Werkstückoberfläche mit dem gepulsten Laserstrahl entlang einer Oberflächenbahn, wobei aufeinander folgende Laserpulse des gepulsten Laserstrahls auf der Werkstückoberfläche in Bahnrichtung einen ersten Pulsüberlapp aufweisen; und

b) Abtragen der vorbehandelten Werkstückoberfläche durch mehrmaliges Überfahren der Werkstückoberfläche mit dem gepulsten Laserstrahl entlang der Oberflächenbahn, wobei aufeinander folgende Laserpulse des gepulsten Laserstrahls auf der Werkstückoberfläche in Bahnrichtung einen zweiten Pulsüberlapp aufweisen, der kleiner als der erste Pulsüberlapp ist.

Erfindungsgemäß wird durch die Vorbehandlung der Werkstückoberfläche im ersten Verfahrensschritt a) die Transmission des oberflächennahen Werkstückbereichs verringert, indem beispielsweise die Werkstückoberfläche mittels der intensiven Laserstrahlung aufgeraut wird. Im oberflächennahen Werkstückbereich werden also Streuzentren erzeugt, die verhindern, dass im zweiten Verfahrensschritt b) Laserstrahlung mit einer dann geringeren Streckenenergie in das unterhalb der vorbehandelten Werkstückoberfläche befindliche transparente Werkstückmaterial eindringen und insbesondere bis zur Werkstückunterseite vordringen kann, was dort zu unerwünschten Schäden oder Modifikationen des Werkstückmaterials führen könnte. Dabei ist die Streckenenergie als Laserleistung geteilt durch die Vorschubgeschwindigkeit definiert. Insbesondere die Ausbildung schädlicher Reflexionen im transparenten Werkstückmaterial während des Laserschneidens kann verhindert bzw. verringert werden, sodass keine oder nur verringerte Beschädigungen des Werkstücks im Bereich des Schnitts oder entfernt davon auftreten. Auch die Ausbildung einer Schädigungszone auf der Werkstückrückseite kann verhindert werden. Mithin wird eine Nachbearbeitung der geschnittenen Kanten überflüssig oder zumindest minimiert. Darüber hinaus ist die Stabilität, insbesondere die Biegebelastbarkeit, von durch das erfindungsgemäße Verfahren geschnittenen Werkstücken erhöht.

Das erfindungsgemäße Verfahren stellt gewissermaßen einen Hybridprozess aus dem das Werkstück lokal vorbehandelnden ersten Verfahrensschritt und dem das eigentliche Schneiden des Werkstücks bewirkenden zweiten Verfahrensschritt dar. Bei dem erfindungsgemäßen Verfahren wird mittels der Laserstrahlen mit unterschiedlichem Pulsüberlapp das Material schichtweise von der Oberfläche des Werkstücks immer tiefer in das Werkstück hinein abgetragen. Der Laserparameter "Pulsüberlapp", welcher sich nach der nachstehenden Formel berechnet:

$$\ddot{U} = 1 - \frac{v}{f \ d_{0f}}$$

mit:

$\ddot{U}$ = Pulsüberlapp [%],
v = Vorschubgeschwindigkeit [m/s],
f = Pulsfrequenz des Laserstrahls [Hz], und
$d_{0f}$ = Fokusdurchmesser [m],

wird dabei von einem zunächst vergleichsweise hohen Wert zum Vorbehandeln des Werkstücks entlang der späteren Schneidkontur nachfolgend auf einen wesentlich niedrigeren Wert zum Schneiden des Werkstückmaterials abgesenkt. Hierzu kann beispielsweise die Vorschubgeschwindigkeit des Laserstrahls bei gleichbleibender Pulsfrequenz des Laserstrahls vom ersten zum zweiten Verfahrensschritt erhöht oder bei gleichbleibender Vorschubgeschwindigkeit die Pulsfrequenz des Laserstrahls verringert werden.

Bei den zu schneidenden Werkstücken handelt es sich insbesondere um dünne transparente Substrate, beispielsweise Glas, Saphir oder dergleichen, mit Dicken von maximal 1mm. Die Einwirktiefe des Laserstrahls beim Vorbehandeln des Werkstücks entlang der Oberflächenbahn im ersten Verfahrensschritt beträgt dann typischerweise 10 μm bis 20 μm. Das Vertiefen der vorbehandelten Werkstückoberfläche zu einer Nut (Schnittfuge) im zweiten Verfahrensschritt erfolgt über die restliche Dicke des zu schneidenden Werkstücks bzw. Substrats. Zur Erzeugung des gepulsten Laserstrahls wird bevorzugt ein Laser eingesetzt, dessen Pulsdauer bzw. Pulsbreite im Pikosekundenbereich liegt. Das erfindungsgemäße Verfahren kann von einer Laserbearbeitungsanlage mit einem gepulsten Laser durchgeführt werden, wobei mittels eines Steuerprogramms die vorbeschriebenen Parameter (Vorschubgeschwindigkeit, Pulsfrequenz, Fokusdurchmesser, Laserleistung, Anzahl der Überfahrten etc.) variiert werden können. Bevorzugt werden dabei im ersten und im zweiten Verfahrensschritt die Laserstrahlen mit demselben Laser erzeugt.

Besonders bevorzugt haben die Laserpulse im ersten und im zweiten Verfahrensschritt jeweils die gleiche Pulsleistung und auf der Werkstückoberfläche jeweils den gleichen Durchmesser.

Abhängig vom zu zerschneidenden Werkstückmaterial und dessen Geometrie kann es vorteilhaft oder erforderlich sein, breitere Spuren bzw. breitere Nuten zu erzeugen um das Werkstück zu durchschneiden. Zur Verbreiterung der vorbehandelten Oberflächenbahn kann im ersten und/oder im zweiten Verfahrensschritt die Werkstückoberfläche mit dem gepulsten Laserstrahl in Bahnrichtung in mehreren zueinander querversetzten Oberflächenbahnen überfahren werden, die in Querrichtung miteinander überlappen können.

Bevorzugt beträgt im ersten Verfahrensschritt der erste Pulsüberlapp mehr als 90%, insbesondere mehr als 95%, und im zweiten Verfahrensschritt der zweite Pulsüberlapp weniger als 70%, insbesondere weniger als 50%. Bei gleicher Laserpulsleistung und bei gleichem Laserstrahldurchmesser auf der Werkstückoberfläche wird im zweiten Verfahrensschritt also nur etwa halb so viel Laserleistung in das Werkstück eingebracht wie im ersten Verfahrensschritt.

Vorzugsweise wird im ersten Verfahrensschritt das Werkstück mit dem Laserstrahl maximal zweimal überfahren, um einen zu hohen Energieeintrag und damit eine zu starke thermisch oder thermomechanische Belastung des Werkstücks zu verhindern.

Zum Durchschneiden des Werkstücks wird der zweite Verfahrensschritt so oft wiederholt, bis das Werkstück entweder entlang der Oberflächenbahn vollständig durchtrennt ist oder durch ein mechanisches Abtragverfahren, insbesondere durch ein Ritzverfahren, durchtrennt werden kann.

Bei einer besonders bevorzugten Verfahrensvariante werden die ersten und zweiten Verfahrensschritte am Werkstück jeweils beidseitig durchgeführt, um von beiden Seiten eine Nut (Schnittfuge) zu erzeugen, die sich dann zu einem vollständigen Trennschnitt ergänzen. Auf diese Weise kann im Vergleich zur einseitigen Bearbeitung des Werkstücks ein schnellerer und weniger Materialabtrag erfordernder Durchschnitt des Werkstücks erreicht werden. Insbesondere kann die Nutbreite auf beiden Seiten des Werkstücks geringer gewählt werden als bei der einseitigen Bearbeitung. Die beidseitige Werkstückbearbeitung kann grundsätzlich gleichzeitig mittels zweier Laser erfolgen. Bevorzugt werden die ersten und zweiten Verfahrensschritte jedoch zunächst auf der einen Werkstückseite und dann auf der gewendeten anderen Werkstückseite durchgeführt. Auf diese Weise kann das Werkstück mittels lediglich eines einzigen Lasers beidseitig bearbeitet werden. Um das Werkstück dabei besonders schnell zu durchschneiden, werden die ersten und zweiten Verfahrensschritte auf der einen Werkstückseite bis zu einer Nuttiefe von 50% der Werkstückdicke und anschließend nach dem Wenden des Werkstücks auf der anderen Werkstückseite solange durchgeführt, bis sich die beiden Nuten zu einem vollständigen Trennschnitt ergänzen und das Werkstück durchgeschnitten ist.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

Es zeigen:

Fign. 1a-1d    die einzelnen Verfahrensschritte des erfindungsgemäßen Abtragverfahrens in einer Schnittansicht durch ein Werkstück;

Fign. 2a-2d    die zwei Pulsfolgen mit unterschiedlichem Pulsüberlapp, die bei dem Verfahren gemäß Fig. 1 eingesetzt werden, in einer Draufsicht auf das Werkstück; und

Fign. 3a-3e    die einzelnen Verfahrensschritte einer Variante des erfindungsgemäßen Abtragverfahrens in einer Schnittansicht durch ein Werkstück.

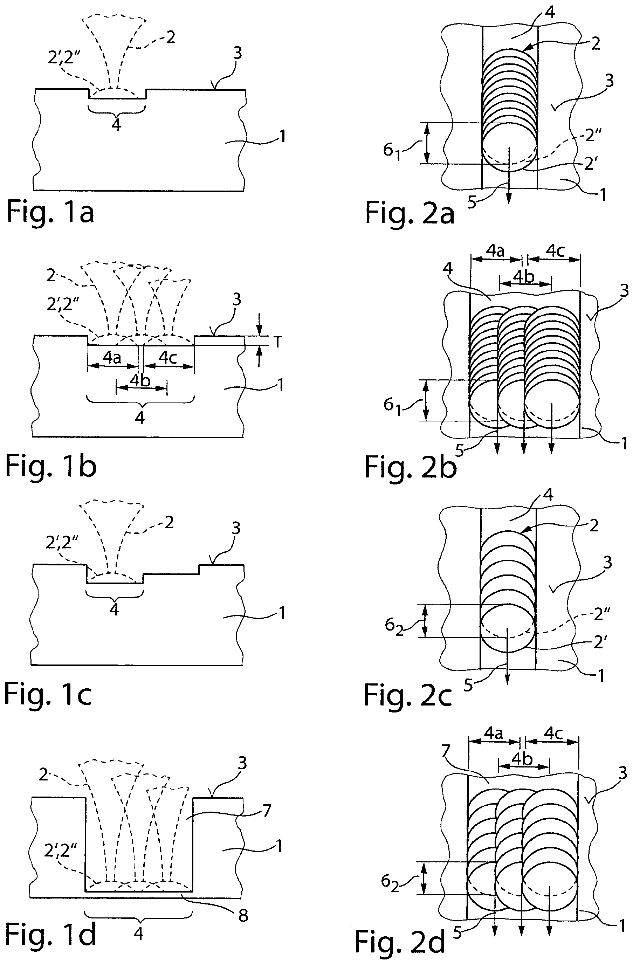

In Fign. 1a bis 1d sind die einzelnen Verfahrensschritte des erfindungsgemäßen Abtragschneidens eines optisch transparenten Werkstücks **1** mittels eines gepulsten Laserstrahls **2** beschrieben gezeigt.

In dem in **Fig. 1a** gezeigten ersten Verfahrensschritt wird die Werkstückoberfläche (Werkstückoberseite) 3 mit dem gepulsten Laserstrahl 2 entlang einer Oberflächenbahn **4** (Fig. 2a) überfahren und dadurch für das eigentliche Abtragen vorbehandelt. Durch die Vorbehandlung wird die Transmission des oberflächennahen Werkstückbereichs verringert, indem beispielsweise die Werkstückoberfläche 3 mittels des Laserstrahls 2 aufgeraut wird. Wie in **Fig. 2a** gezeigt, weisen im ersten Verfahrensschritt aufeinander folgende Laserpulse **2', 2"** des gepulsten Laserstrahls 2 auf der Werkstückoberfläche 3 in Bahnrichtung **5** einen ersten Pulsüberlapp $6_1$ von beispielsweise 95%, auf, sodass sich aufeinander folgende Pulse 2', 2" größtenteils überdecken.

Zur Verbreiterung der vorbehandelten Oberflächenbahn 4 auf eine das Durchschneiden des Werkstücks 1 ermöglichende Bahnbreite wird die Werkstückoberfläche 3 mit dem gepulsten Laserstrahl 2 und mit dem ersten Pulsüberlapp $6_1$ in Bahnrichtung 5 in mehreren zueinander querversetzten Oberflächenbahnen **4a-4c** überfahren (**Fig. 1b**), die in Querrichtung einen Überlapp (Linienüberlapp) aufweisen können, wie in **Fig. 2b** gezeigt ist.

Der gepulste Laserstrahl 2 mit dem ersten Pulsüberlapp $6_1$ wirkt im ersten Verfahrensschritt typischerweise bis in eine Tiefe **T** von 10 μm bis 20 μm, indem bis in diese Tiefe T Substratmaterial abgetragen oder aufgeschmolzen wird. Um den thermischen Energieeintrag in das Werkstück 1 entlang der Oberflächenbahn 4 bei der Vorbehandlung zu begrenzen und somit Schädigungen, insbesondere Risse, im Werkstück 1 zu verhindern, wird im ersten Verfahrensschritt die gleichen Stelle der Werkstückoberfläche 3 höchstens zweimal mit dem gepulste Laserstrahl 2 überfahren.

In dem in **Fig. 1c** gezeigten zweiten Verfahrensschritt erfolgt das Abtragen der vorbehandelten Werkstückoberfläche 3 durch mehrmaliges Überfahren der Werkstückoberfläche 3 mit dem gepulsten Laserstrahl 2 entlang der Oberflächenbahn 4. Wie in **Fig. 2c** gezeigt, weisen im zweiten Verfahrensschritt aufeinander folgende Laserpulse 2', 2" des gepulsten Laserstrahls 2 auf der Werkstückoberfläche 3 in Bahnrichtung 5 einen im Vergleich zum ersten Pulsüberlapp $6_1$ kleineren zweiten Pulsüberlapp $6_2$ von beispielsweise 55%, auf. Bei gleichbleibender Laserpulsleistung des Laserstrahls 2 kann der zweite Pulsüberlapp $6_2$ bei gleichbleibender Pulsfrequenz durch eine im Vergleich zum ersten Verfahrensschritt höhere Vorschubgeschwindigkeit des Laserstrahls 2 auf der Werkstückoberfläche 3 oder bei gleichbleibender Vorschubgeschwindigkeit durch eine im Vergleich zum ersten Verfahrensschritt geringere Pulsfrequenz erzielt werden.

Wie in **Fig. 1d** gezeigt, wird analog zum ersten Verfahrensschritt die Werkstückoberfläche 3 mittels des gepulsten Laserstrahls 2 mit dem zweiten Pulsüberlapp $6_2$ in Bahnrichtung 5 in mehreren zueinander querversetzten Oberflächenbahnen 4a-4c überfahren, die in Querrichtung einen Überlapp (Linienüberlapp) aufweisen können, wie in **Fig. 2d** gezeigt ist.

Der zweite Verfahrensschritt wird wiederholt, bis sich durch Materialabtragung zunächst eine Nut **7** in der Werkstückoberfläche 3 ausbildet (Fig. 1d, 2d) und nach mehreren Hundert Überfahrten das Werkstück 1 schließlich vollständig durchschnitten ist. Alternativ zum vollständigen Durchschneiden mittels des Laserstrahls 2 kann ein noch im Werkstück 1 vorhandener Nutboden **8** auch durch ein mechanisches Abtragverfahren, insbesondere durch ein Ritzverfahren, vollständig durchtrennt werden.

Durch die im ersten Verfahrensschritt vorbehandelte Werkstückoberfläche 3 wird wirkungsvoll verhindert, dass im zweiten Verfahrensschritt der Laserstrahl 2 in das unterhalb der vorbehandelten Werkstückoberfläche 3 befindliche Werkstückmaterial eindringen und insbesondere bis zur Werkstückunterseite vordringen kann, was dort zu unerwünschten Schäden oder Modifikationen des Werkstückmaterials führen könnte.

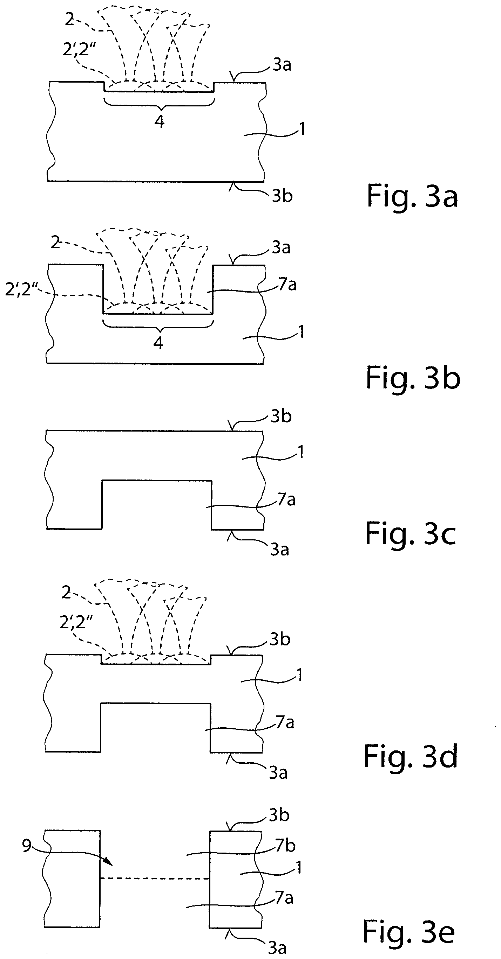

In Fign. 3a bis 3e sind die einzelnen Verfahrensschritte einer Variante des erfindungsgemäßen Abtragverfahrens gezeigt.

Zunächst wird die dem Laserstrahl 2 zugewandte erste Werkstückseite **3a** gemäß den ersten und zweiten Verfahrensschritten bearbeitet, indem die eine Werkstückseite 3a mittels des gepulsten Laserstrahls 2 mit dem ersten Pulsüberlapp $6_1$ entlang der Oberflächenbahn 4 überfahren und dadurch für das eigentliche Abtragen vorbehandelt wird (**Fig. 3a**) und anschließend durch Materialabtragen mittels des gepulsten Laserstrahls 2 mit dem zweiten Pulsüberlapp $6_2$ eine erste Nut **7a** in die erste Werkstückseite 3a geschnitten wird (**Fig. 3b**).

Wenn die erste Nut 7a etwa bis zur Hälfte der Werkstückdicke in das Werkstück 1 geschnitten ist, wird das Werkstück 1 gewendet (**Fig. 3c**). Die nun dem Laserstrahl 2 zugewandte zweite Werkstückseite **3b** wird gemäß den ersten und zweiten Verfahrensschritten bearbeitet, indem die zweite Werkstückseite 3b mittels des gepulsten Laserstrahls 2 mit dem ersten Pulsüberlapp $6_1$ entlang der gleichen Oberflächenbahn 4 überfahren und dadurch für das eigentliche Abtragen vorbehandelt wird (**Fig. 3d**) und anschließend durch Materialabtragen mittels des gepulsten Laserstrahls 2 mit dem zweiten Pulsüberlapp $6_2$ eine zweite Nut **7b** in die zweite Werkstückseite 3b geschnitten wird. Die zweite Nut 7b wird so tief weit geschnitten, bis ein vollständiger Trennschnitt **9** entsteht (**Fig. 3e**).

**Patentansprüche**

1. Verfahren zum Abtragen eines transparenten Werkstücks (1) mittels eines gepulsten Laserstrahls (2), **gekennzeichnet durch** die folgenden Verfahrensschritte:

   a) Vorbehandeln der Werkstückoberfläche (3) mittels reines Laserstrahls (2); und
   b) Abtragen der vorbehandelten Werkstückoberfläche (3) **durch** mehrmaliges Überfahren der Werkstückoberfläche (3) mit einem gepulsten Laserstrahl (2) entlang der Oberflächenbahn (4),
   **dadurch** gekennzeichnet,
   dass im Schritt a) **durch** Überfahren der Werkstückoberfläche (3) mit einem gepulsten Laserstrahl (2) entlang der Oberflächenbahn (4) Streuzentren im oberflächennahen Werkstückbereich erzeugt werden, wobei in Bahnrichtung (5) aufeinander folgende Laserpulse (2',2'') des gepulsten Laserstrahls (2) auf der Werkstückoberfläche (3) einen ersten Pulsüberlapp ($6_1$) aufweisen und **dadurch** die Transmission des oberflächennahen Werkstückbereichs verringert wird,
und dass im Schritt b) die in Bahnrichtung (5) aufeinander folgende Laserpulse (2',2'') des gepulsten Laserstrahls (2) auf der Werkstoffoberfläche (3) einen zweiten Pulsüberlapp ($6_2$) aufweisen, welcher kleiner als der erste Pulsüberlapp ($6_1$) des Schritts a) ist.

2. Verfahren nach Anspruch 1, **dadurch gekennzeichnet, dass** die Laserpulse (2', 2'') in Schritt a) und in Schritt b) jeweils die gleiche Pulsleistung und auf der Werkstückoberfläche (3) jeweils den gleichen Durchmesser haben.

3. Verfahren nach Anspruch 1 oder 2, **dadurch gekennzeichnet, dass** die unterschiedlichen Pulsüberlappe ($6_1$, $6_2$) in Schritt a) und in Schritt b) durch eine Änderung der Pulsfrequenz und/oder der Überfahrgeschwindigkeit erreicht werden.

4. Verfahren nach einem der vorhergehenden Ansprüche, **dadurch gekennzeichnet, dass** der erste Pulsüberlapp ($6_1$) mehr als 90%, insbesondere mehr als 95%, beträgt.

5. Verfahren nach einem der vorhergehenden Ansprüche, **dadurch gekennzeichnet, dass** der zweite Pulsüberlapp ($6_2$) weniger als 70%, insbesondere weniger als 50%, beträgt.

6. Verfahren nach einem der vorhergehenden Ansprüche, **dadurch gekennzeichnet, dass** in Schritt a) und/oder in Schritt b) der Laserstrahl (2) die Werkstückoberfläche (3) in mehreren zueinander querversetzten Oberflächenbahnen (4a-4c) in Bahnrichtung (5) überfährt.

7. Verfahren nach einem der vorhergehenden Ansprüche, **dadurch gekennzeichnet, dass** in Schritt a) die Werkstückoberfläche (3a) mit dem Laserstrahl (2) maximal zweimal überfahren wird.

8. Verfahren nach einem der vorhergehenden Ansprüche, **dadurch gekennzeichnet, dass** in Schritt a) und in Schritt b) die Laserstrahlen (2) mit demselben Laser erzeugt werden.

9. Verfahren nach einem der vorhergehenden Ansprüche, **dadurch gekennzeichnet, dass** in Schritt a) das Vorbehandeln der Werkstückoberfläche (3a) das Aufrauen der Werkstückoberfläche (3a) umfasst.

**10.** Verfahren nach einem der vorhergehenden Ansprüche, **dadurch gekennzeichnet, dass** Schritt b) so oft wiederholt wird, bis das Werkstück (1) entlang der Oberflächenbahn (4) vollständig durchtrennt ist.

**11.** Verfahren nach einem der Ansprüche 1 bis 9, **dadurch gekennzeichnet, dass** das Werkstück (1) an der abgetragenen Oberflächenbahn (4) durch ein mechanisches Abtragverfahren, insbesondere durch ein Ritzverfahren, vollständig durchtrennt wird.

**12.** Verfahren nach einem der vorhergehenden Ansprüche, **dadurch gekennzeichnet, dass** die Schritte a) und b) am Werkstück (1) beidseitig (3a, 3b) entlang der gleichen Oberflächenbahn (4) durchgeführt werden.

**13.** Verfahren nach Anspruch 12, **dadurch gekennzeichnet, dass** die Schritte a) und b) zunächst auf der einen Seite (3a) und dann auf der gewendeten anderen Seite (3b) des Werkstücks (1) durchgeführt werden.


**Claims**

**1.** Method for ablating a transparent workpiece (1) by means of a pulsed laser beam (2), **characterised by** the following method steps:

   a) pretreating the workpiece surface (3) by means of a laser beam (2);
   b) ablating the pretreated workpiece surface (3) by moving a pulsed laser beam (2) over the workpiece surface (3) along the surface path (4) multiple times,
   **characterised in that**
   in step a) scattering centres in the workpiece area close to the surface are generated by moving a pulsed laser beam (2) over the workpiece surface (3) along the surface path (4), wherein laser pulses (2', 2"), which are consecutive in the path direction (5), of the pulsed laser beam (2) have a first pulse overlap ($6_1$) on the workpiece surface (3) and, thereby, the transmission of the workpiece area close to the surface is reduced,
   and in step b) laser pulses (2', 2"), which are consecutive in the path direction (5), of the pulsed laser beam (2) have a second pulse overlap ($6_2$) on the workpiece surface (3), which is less than the first pulse overlap (61) of step a).

**2.** Method according to claim 1, **characterised in that** the laser pulses (2', 2") have the same pulse power and the same diameter on the workpiece surface (3) in step a) and in step b) in each case.

**3.** Method according to claim 1 or 2, **characterised in that** the different pulse overlaps ($6_1$, $6_2$) in step a) and in step b) are achieved by changing the pulse frequency and/or the moving speed.

**4.** Method according to one of the preceding claims, **characterised in that** the first pulse overlap ($6_1$) is more than 90%, in particular more than 95%.

**5.** Method according to one of the preceding claims, **characterised in that** the second pulse overlap ($6_2$) is less than 70%, in particular less than 50%.

**6.** Method according to one of the preceding claims, **characterised in that** in step a) and/or in step b) the laser beam (2) is moved over the workpiece surface (3) in multiple surface paths (4a-4c), offset laterally from each other, in the path direction (5).

**7.** Method according to one of the preceding claims, **characterised in that** in step a) the laser beam (2) is moved over the workpiece surface (3a) no more than twice.

**8.** Method according to one of the preceding claims, **characterised in that** in step a) and in step b) the laser beams (2) are generated with the same laser.

**9.** Method according to one of the preceding claims, **characterised in that** in step a) the pretreatment of the workpiece surface (3a) comprises roughening of the workpiece surface (3a).

**10.** Method according to one of the preceding claims, **characterised in that** step b) is repeated sufficiently often until the workpiece (1) is parted completely along the surface path (4).

**11.** Method according to one of the claims 1 to 9, **characterised in that** the workpiece (1) is parted completely on the ablated surface path (4) by a mechanical ablation method, in particular by a scratching process.

**12.** Method according to one of the preceding claims, **characterised in that** the steps a) and b) are carried out on the workpiece (1) on both sides (3a, 3b) along the same surface path (4).

**13.** Method according to claim 12, **characterised in that** the steps a) and b) are carried out first on the one side (3a) and then on the other reverse side (3b) of the workpiece (1).


**Revendications**

**1.** Procédé d'ablation au laser d'une pièce transparente (1) au moyen d'un faisceau laser pulsé (2), **caractérisé par** les étapes de procédé suivantes :

a) prétraitement de la surface de pièce (3) au moyen d'un faisceau laser (2), et
b) ablation de la surface de pièce prétraitée (3) par parcours répétés de la surface de pièce (3) d'un faisceau laser pulsé (2) le long de la trajectoire de surface (4),
**caractérisé en ce que**
dans l'étape a) des centres de dispersion sont produits dans la zone de pièce proche de la surface par le parcours de la surface de pièce (3) par un faisceau laser pulsé (2) le long de la trajectoire de surface (4), sachant que dans la direction de la trajectoire (5), les impulsions laser (2', 2") successives du faisceau laser pulsé (2) présentent sur la surface de pièce (3) une première superposition d'impulsions ($6_1$)
et
**en ce que**
la transmission de la zone de pièce proche de la surface est réduite, et
**en ce que** dans l'étape b), les impulsions laser (2', 2") successives du faisceau laser pulsé (2) dans la direction de la trajectoire (5) présentent une deuxième superposition d'impulsions ($6_2$) sur la surface de pièce (3), laquelle est plus petite que la première superposition d'impulsions ($6_1$) de l'étape a).

2. Procédé selon la revendication 1, **caractérisé en ce que** les impulsions laser (2', 2'') ont respectivement la même puissance d'impulsion et respectivement le même diamètre sur la surface de la pièce (3) dans l'étape a) et dans l'étape b).

3. Procédé selon la revendication 1 ou 2, **caractérisé en ce que** les superpositions d'impulsions différentes ($6_1$, $6_2$) dans l'étape a) et dans l'étape b) sont obtenues par une modification de la fréquence d'impulsion et/ou de la vitesse de passage.

4. Procédé selon l'une quelconque des revendications précédentes, **caractérisé en ce que** la première superposition d'impulsions ($6_1$) est supérieure à 90 %, en particulier supérieure à 95 %.

5. Procédé selon l'une quelconque des revendications précédentes, **caractérisé en ce que** la deuxième superposition d'impulsions ($6_2$) est inférieure à 70 %, en particulier inférieure à 50 %.

6. Procédé selon l'une quelconque des revendications précédentes, **caractérisé en ce que** dans l'étape a) et/ou dans l'étape b), le faisceau laser (2) parcourt la surface de pièce (3) dans plusieurs trajectoires de surface (4a-4c) transversalement décalées l'une par rapport à l'autre dans la direction de la trajectoire (5) .

7. Procédé selon l'une quelconque des revendications précédentes, **caractérisé en ce que** dans l'étape a), la surface de pièce (3a) est parcourue au maximum deux fois par le faisceau laser (2).

8. Procédé selon l'une quelconque des revendications précédentes, **caractérisé en ce que** dans l'étape a) et dans l'étape b), les faisceaux laser (2) sont produits avec le même laser.

9. Procédé selon l'une quelconque des revendications précédentes, **caractérisé en ce que** dans l'étape a), le prétraitement de la surface de pièce (3a) comprend la réalisation de la rugosité de la surface de pièce (3a).

10. Procédé selon l'une quelconque des revendications précédentes, **caractérisé en ce que** l'étape b) est souvent répétée jusqu'à ce que la pièce (1) soit complètement sectionnée le long de la trajectoire de surface (4).

11. Procédé selon l'une quelconque des revendications 1 à 9, **caractérisé en ce que** la pièce (1) est complètement séparée sur la trajectoire de surface (4) ablatée par un procédé d'ablation mécanique, en particulier par un procédé de rainure.

12. Procédé selon l'une quelconque des revendications précédentes, **caractérisé en ce que** les étapes a) et b) sont exécutées sur la pièce (1) des deux côtés (3a, 3b) le long de la même trajectoire de surface (4).

13. Procédé selon la revendication 12, **caractérisé en ce que** les étapes a) et b) sont d'abord exécutées sur un côté (3a) et ensuite sur l'autre côté retourné (3b) de la pièce (1).

Fig. 1a

Fig. 2a

Fig. 1b

Fig. 2b

Fig. 1c

Fig. 2c

Fig. 1d

Fig. 2d

8

Fig. 3a

Fig. 3b

Fig. 3c

Fig. 3d

Fig. 3e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008160295 A
- EP 1945401 B1
- EP 2258512 B1
- US 6552301 B2
- WO 2012006736 A2